# EUROPÄISCHE PATENTSCHRIFT

(11) **EP 3 403 882 B1**
(45) Veröffentlichungstag und Bekanntmachung des Hinweises auf die Patenterteilung: **25.03.2020**
(21) Anmeldenummer: 18171790.1
(22) Anmeldetag: 11.05.2018
(51) Int. Cl.: B60R 11/04, B60S 1/56, G02B 27/00, B60R 11/00

(54) **KAMERAVORRICHTUNG**
CAMERA DEVICE
DISPOSITIF FORMANT CAMERA

(30) Priorität: 16.05.2017 DE 102017110588
(43) Veröffentlichungstag der Anmeldung: 21.11.2018
(73) Patentinhaber: HUF Hülsbeck & Fürst GmbH & Co. KG, 42551 Velbert (DE)
(72) Erfinder: BARTHEL, Joachim, 37194 Wahlsburg - Lippoldsberg (DE)
(74) Vertreter: Bals, Rüdiger

(56) Entgegenhaltungen:
- WO-A1-2015/121315
- DE-A1-102006 023 103
- DE-A1-102011 000 683
- DE-A1-102015 118 670

## Beschreibung

Die Erfindung betrifft eine Kameravorrichtung zur Bilderfassung des Außenbereiches eines Kraftfahrzeuges nach dem unabhängigen Vorrichtungsanspruch, die mit einem Gehäuse, in welchem eine Kameraeinheit aufgenommen ist, und einem Deckelelement ausgebildet ist, wobei das Deckelelement bewegbar zwischen zumindest zwei Stellungen gelagert ist, nämlich: einer Schließstellung, in welcher das Deckelelement eine Öffnung im Gehäuse verschließt, durch welche eine Bilderfassung für die Kameraeinheit möglich ist, und einer Offenstellung, in welcher das Deckelelement die Öffnung im Gehäuse zumindest zum Teil freigibt, wobei in der Schließstellung des Deckelelementes die Kameraeinheit von außen unzugänglich sich hinter dem Deckelelement befindet und in der Offenstellung des Deckelelementes die Bilderfassung für die Kameraeinheit durch die Öffnung durchführbar ist. Ferner betrifft die Erfindung ein Verfahren zum Betrieb einer Kameravorrichtung nach dem unabhängigen Verfahrensanspruch.

Vorrichtungen mit Kameraeinheiten sind zur Umfelderfassung von Kraftfahrzeugen grundsätzlich bekannt. Derartige Vorrichtungen kommen bspw. als Frontkameras zum Einsatz, um den Bereich vor dem Kraftfahrzeug zu erfassen, einen Abstand zu den vorfahrenden Kraftfahrzeugen abzuschätzen, Verkehrszeichen zu erkennen und/oder einen Notbremsvorgang zum Fußgängerschutz einzuleiten. Weiterhin werden derartige Kameravorrichtungen als Einpark- und/oder Rangierhilfen bei Kraftfahrzeugen eingesetzt, um die mit den konventionellen Spiegeln des Kraftfahrzeugs nicht einsehbaren Bereiche um das Kraftfahrzeug herum zu erfassen. Dabei wird ein Deckelelement verwendet, welches zwischen zwei Stellungen verfahrbar ist, nämlich: einer Schließstellung, in welcher das Deckelelement eine Öffnung im Gehäuse verschließt, durch welche eine Bilderfassung für die Kameraeinheit möglich ist, und einer Offenstellung, in welcher das Deckelelement die Öffnung im Gehäuse zumindest zum Teil freigibt, um die Bilderfassung für die Kameraeinheit durch die Öffnung zu ermöglichen.

Eine Kameravorrichtung zur Bilderfassung des Außenbereiches eines Kraftfahrzeug gemäß dem Oberbegriff des Anspruchs 1 ist aus dem Dokument WO 2015/121315 bekannt.

Bei solchen Vorrichtungen stellt sich immer wieder als Problem heraus, dass das Deckelelement in der Offenstellung starr und unbeweglich von der Außenfläche des Kraftahrzeuges absteht und somit eine Kollisions- und/oder Verletzungsgefahr, insbesondere für Fußgänger, darstellt. Außerdem ist es nachteilig, dass das Deckelelement in der Offenstellung, bspw. durch einen Stoß und/oder Aufprall, leicht beschädigt oder gar abgebrochen werden kann, wodurch die Kameravorrichtung außer Funktion gesetzt werden kann.

Aufgabe der vorliegenden Erfindung ist es daher, eine Kameravorrichtung zur Bilderfassung des Außenbereiches eines Kraftfahrzeuges sowie ein Verfahren bereitzustellen, welche die oben genannten Nachteile zumindest zum Teil überwindet. Insbesondere ist es Aufgabe der vorliegenden Erfindung eine Kameravorrichtung zu schaffen, die einfach aufgebaut ist, die zuverlässig im Betrieb ist und/oder die einen wirksamen Kollisions- und/oder Verletzungsschutz, einen sogenannten Fußgängerschutz, in jeder Betriebssituation der Kameravorrichtung ermöglicht. Ferner soll ein Verfahren zum Betrieb einer solchen Kameravorrichtung bereitgestellt werden. Das Verfahren soll insbesondere ermöglichen, dass die Kameravorrichtung in jeder Betriebssituation der Kameravorrichtung sicher betrieben werden kann, ohne eine Kollisions- und/oder Verletzungsgefahr, insbesondere für Fußgänger, darzustellen.

Diese Aufgabe wird erfindungsgemäß durch eine Kameravorrichtung mit den Merkmalen des unabhängigen Vorrichtungsanspruchs 1, insbesondere aus dem kennzeichnenden Teil, und durch ein erfindungsgemäßes Verfahren gemäß dem unabhängigen Verfahrensanspruch 14 gelöst. In den abhängigen Ansprüchen sind bevorzugte Weiterbildungen der Erfindung aufgeführt. Merkmale, die zu den einzelnen Ausführungsformen der erfindungsgemäßen Kameravorrichtung und des erfindungsgemäßen Verfahrens offenbart werden, können in der Weise miteinander kombiniert werden, dass bezüglich der Offenbarung zu den Ausführungsformen der erfindungsgemäßen Kameravorrichtung und des erfindungsgemäßen Verfahrens stets wechselseitig Bezug genommen wird bzw. werden kann.

Die erfindungsgemäße Aufgabe wird durch eine Kameravorrichtung zur Bilderfassung des Außenbereiches eines Kraftfahrzeuges gelöst, die mit einem Gehäuse, in welchem eine Kameraeinheit aufgenommen ist, und einem Deckelelement ausgebildet ist, wobei das Deckelelement bewegbar zwischen zumindest zwei Stellungen gelagert ist, nämlich: einer Schließstellung, in welcher das Deckelelement eine Öffnung im Gehäuse verschließt, durch welche eine Bilderfassung für die Kameraeinheit möglich ist, und einer Offenstellung, in welcher das Deckelelement die Öffnung im Gehäuse zumindest zum Teil freigibt, wobei in der Schließstellung des Deckelelementes die Kameraeinheit von außen unzugänglich sich hinter dem Deckelelement befindet und in der Offenstellung des Deckelelementes die Bilderfassung für die Kameraeinheit durch die Öffnung durchführbar ist. Hierzu sieht die Erfindung vor, dass das Deckelelement belastet durch zumindest ein Federelement gelagert ist, sodass das Deckelelement durch eine Druckkraft (auch Drücken genannt) von außen (auf das Deckelelement) zumindest teilweise (zum Teil) von der Offenstellung in die Schließstellung überführbar ist.

Die erfindungsgemäße Kameravorrichtung kann am Kraftfahrzeug, insbesondere am vorderen oder hinteren Ende des Kraftfahrzeuges, angeordnet sein. Bspw. kann die Vorrichtung in einem Fahrzeugrahmen, in einem Verkleidungselement, wie einem Stoßfänger, oder in der Kofferraumklappe des Kraftfahrzeuges angeordnet sein. Das erfindungsgemäße Gehäuse kann dabei ein- oder mehrteilig ausgeführt sein und bspw. ein Trägerelement mit einer Gehäusehaube und ggfs. einer Trennwand zwischen der Kameraeinheit und der Antriebseinheit umfassen. Insbesondere kann das erfindungsgemäße Gehäuse jegliche in Bezug zum Fahrzeug stehenden Teile zum Umschließen bzw. Aufnehmen der Vorrichtung bedeuten. Weiterhin ist es möglich, dass das Deckelelement beleuchtet sein kann, bspw. mithilfe mindestens einer Lichtquelle, wie z. B. einer LED oder OLED. Zudem ist es denkbar, dass die Lichtquelle innerhalb des Gehäuses der Kameravorrichtung angeordnet sein kann. Ferner ist es denkbar, dass das Deckelelement zumindest bereichsweise und/oder zumindest in eine Durchlassrichtung von innen nach außen aus dem Gehäuse für zumindest eine Lichtwellenlänge durchlässig sein kann. Zudem ist es denkbar, dass ein Lichtleiter vorgesehen sein kann, um das Licht der Lichtquelle zu leiten und/oder zu verteilen, um vorzugsweise einen Umriss des Deckelelementes und/oder ein Logo bzw. Emblem am Deckelelement zu hinterleuchten. Zudem ist es denkbar, dass das Deckelelement von draußen verchromt sein und/oder ein Zierelement und/oder ein Logo bzw. ein Emblem aufweisen kann, die verchromt oder farblich hervorgehoben sein können.

Das erfindungsgemäße Federelement ist derart steif bzw. mit einer derartigen (hohen) Federkonstante ausgeführt, dass das Federelement im normalen Betrieb der Kameravorrichtung seine Form nicht verändert. Mit anderen Worten kann das Federelement in einem Normalbetrieb der Kameravorrichtung die Form behalten, die dem entspannten Zustand des Federelementes entspricht. D. h., dass das Federelement durch das Überführen des Deckelelementes zwischen der Schließstellung und der Offenstellung weder komprimiert noch auseinandergezogen wird. Vielmehr wird das Federelement formunverändert mit dem Deckelelement zwischen der Schließstellung und der Offenstellung verfahren. Dabei kann das Federelement von einer Seite am Deckelelement und von einer anderen Seite an einem bewegbaren Teil der Kameravorrichtung, wie z. B. einem Schlitten für die Kameraeinheit, abgestützt sein. Zudem kann das Federelement im normalen Betrieb der Kameravorrichtung als ein starres Übertragungsglied einer Antriebswirkung auf das Deckelelement agieren. Dabei können die Antriebskräfte, die im Normalbetrieb der Kameravorrichtung auf das Federelement wirken, das Federelement weder komprimieren noch auseinanderziehen.

Der Erfindungsgedanke liegt dabei darin, dass das Federelement als ein elastisches Element erst dann ins Spiel gebracht wird, wenn das Deckelelement von seiner vorgegebenen Bewegungsbahn durch äußere Einflüsse bzw. Kräfte abweicht, die höher sind als vorhandene Antriebskräfte. Mit anderen Worten wird das Federelement nur in einem Notfallbetrieb beansprucht bzw. komprimiert. Eine Notfallsituation ist bspw. denkbar, wenn am Deckelelement in der Offenstellung von außen Druck ausgeübt wird, z. B. durch einen Stoß und/oder einen Aufprall, bspw. mit einem Fußgänger. In einer solchen Situation wird das Federelement komprimiert (oder auch gespannt genannt), sodass das Deckelelement in der Offenstellung nachgiebig gegen eine Federkraft des Federelementes zumindest zum Teil zurück in die Schließstellung überführt werden kann. Somit kann ein wirksamer Kollisionsschutz beim offenen Deckelelement, insbesondere für Fußgänger realisiert werden. Die Gefahr, sich an einem starr abstehenden Deckelelement zu verletzten, wird durch ein im Notfallbetrieb federbelastetes Deckelelement reduziert bis gar vermieden. Ein nachgiebiges Verhalten des Deckelelementes in der Offenstellung bei einem Druck von außen sorgt außerdem dafür, dass die Aufprallkräfte durch Komprimieren des Federelementes aufgenommen werden können, ohne einen Fußgänger zu verletzen. Wenn der Druck von außen am Deckelelement nicht mehr wirkt, sorgt das Federelement beim Entspannen dafür, dass das Deckelelement zurück in die Offenstellung überführt wird. Weiterhin ist es von Vorteil, dass das im Notfall federbelastete bzw. nachgiebig gelagerte Deckelelement in der Offenstellung sogar beim angelegten äußeren Druck und/oder abrupten Stößen nicht beschädigt oder abgerochen wird. Eine andere Notfallsituation ist bspw. denkbar, wenn das Deckelelement in der Schließstellung zugefroren ist. Normale Antriebskräfte können dabei nicht ausreichen, um das Eis zu brechen und das Deckelelement zu betätigen. In einer solchen Notfallsituation kann das Federelement aktiviert werden und solange die Antriebskräfte absorbieren bis die gespeicherte Antriebsenergie ausreichend groß ist, um das Eis zu brechen und das Deckelelement in die Offenstellung aufzudrücken. Somit kann eine sichere Funktionsweise der Kameravorrichtung und insbesondere des Deckelelementes in jeder Betriebssituation der Kameravorrichtung, sogar im Notfallbetrieb, gewährleitstet werden.

Auch kann das Deckelelement durch die Kameraeinheit angetrieben werden, um im Normalbetrieb der Kameravorrichtung zwischen der Offenstellung und der Schließstellung überführt zu werden. Die Kameraeinheit kann dabei die Wirkung des Antriebes, insbesondere über das Federelement, auf das Deckelelement übertragen, welches im Normalbetrieb der Kameravorrichtung als ein starres Übertragungsglied dienen kann. Das Federelement kann zudem im Normalbetrieb der Kameravorrichtung auf die Kameraeinheit und diese dann auf das Deckelelement einwirken, bspw. drücken. Die Kameraeinheit und das Deckelelement können sich sowohl im Normalbetrieb als auch im Notfallbetrieb der Kameravorrichtung synchron zueinander bewegen, ohne eine relative Ausrichtung zueinander zu verändern. In einer denkbaren Notfallsituation, bspw. bei einer Krafteinwirkung von außen gemeint ist einem Druck von außen am Deckelelement in der Offenstellung, kann das Deckelelement zusammen mit der Kameraeinheit nachgiebig entgegen der Wirkung der Federkraft zurück in Richtung der Schließstellung eingedrückt werden, sodass das Deckelelement bündiger zur Fahrzeugoberfläche angeordnet werden kann als in der Offenstellung. Somit kann eine Unfallgefahr insbesondere für Personen reduziert werden. Wenn der Druck von außen am Deckelelement aufgehoben wird, kann die Federkraft dafür sorgen, dass das Deckelelement zusammen mit der Kameraeinheit in Richtung zur Offenstellung zurückgelangen können. In einer anderen denkbaren Notfallsituation, bspw. beim vereisten Deckelelement in der Schließstellung, kann ein Schlitten für die Kameraeinheit solange angetrieben werden, bis das Federelement zusammengedrückt wird und die Kameraeinheit anschließend das Deckelelement mithilfe der zwischengespeicherten Federenergie aus der Schließstellung in die Offenstellung aufdrücken kann.

Ferner kann es im Rahmen der Erfindung vorgesehen sein, dass ein Schlitten für die Kameraeinheit vorgesehen sein kann. Durch den Schlitten kann die Kameraeinheit als eine Einheit geschützt aufgenommen und angetrieben werden. Vorteilhafterweise kann der Schlitten unmittelbar durch einen Antrieb angetrieben werden und die Antriebswirkung auf die Kameraeinheit über das Federelement übertragen, welches im Normalbetrieb der Kameravorrichtung als ein starres Übertragungsglied dienen kann. Hierzu kann der Schlitten gelenkig mit einer Antriebsachse gelagert sein. Der Schlitten kann somit ein Übertragungsglied zwischen dem Antrieb und der Kameraeinheit bilden. Die Kameraeinheit kann wiederum die Antriebswirkung auf das Deckelelement weiterleiten. Dies kann vorteilhaft sein, um den Schlitten und die Kameraeinheit zumindest in manchen Betriebssituationen der Kameravorrichtung, insbesondere im Notfallbetrieb, vorzugsweise über das komprimierbare Federelement, bewegungstechnisch voneinander zu entkoppeln.

Vorteilhafterweise kann der Schlitten in bestimmten Notfallsituationen bei der Übertragung der Antriebswirkung auf die Kameraeinheit über das komprimierbare Federelement einen gewissen Nachlauf und/oder Rücklauf für die Kameraeinheit bzgl. des Schlittens ermöglichen. Hierzu kann die Kameraeinheit bewegbar im Schlitten aufgenommen sein. In einer denkbaren Notfallsituation, bspw. beim vereisten Deckelelement in der Schließstellung, kann der Schlitten solange angetrieben werden und das Federelement zwischen dem Schlitten und der Kameraeinheit solange zusammendrücken, bis die gespeicherte Antriebsenergie im Federelement ausreichend groß ist, um sogar ein vereistes Deckelelement, insbesondere über die Kameraeinheit, aufzudrücken. In einer anderen Notfallsituation, wenn bspw. das Deckelelement in der Offenstellung von außen eingedrückt wird, kann der Schlitten in einer unveränderlichen Lage, insbesondere bzgl. der Antriebsachse, verbleiben, ohne die Kameraeinheit mit dem Deckelelement daran zu hindern, zumindest vorübergehend in Richtung zum Inneren der Kameravorrichtung zu verfahren. Dabei kann die Lageänderung der Kameraeinheit bzgl. des Schlittens über das komprimierte Federelement erreicht werden. Somit kann ein wirksamer Fußgängerschutz für das Deckelelement und die Kameraeinheit sogar ohne eine aktive Betätigung des Antriebs realisiert werden. Dabei kann der Antrieb selbsthemmend in der Arbeitsposition des Schlittens ausgebildet sein, wobei der Nachlauf und/oder Rücklauf für die Kameraeinheit und somit für das Deckelelement bzgl. des Schlittens und somit bzgl. der Antriebachse über eine bewegbare Verbindung der Kameraeinheit mit dem Schlitten ermöglicht werden kann.

Weiterhin kann es im Rahmen der Erfindung vorgesehen sein, dass der Schlitten bewegbar zwischen zumindest zwei Positionen, insbesondere am Gehäuse, gelagert sein kann, nämlich: einer Ruheposition, in welcher die Kameraeinheit durch den Schlitten im Gehäuse aufgenommen ist, und einer Arbeitsposition, in welcher die Kameraeinheit durch den Schlitten zumindest zum Teil aus der Öffnung des Gehäuses herausfahrbar ist. In der Ruheposition des Schlittens kann die Kameraeinheit vorteilhafterweise im Inneren des Gehäuses geschützt aufgenommen werden und sich hinter dem Deckelelement von außen unzugänglich befinden. In der Arbeitsposition des Schlittens kann die Kameraeinheit zumindest zum Teil mithilfe des Schlittens aus der Öffnung im Gehäuse herausgefahren sein, wodurch die Kameraeinheit vorteilhafterweise einen breiteren Aufnahmewinkel abdecken und eine umfassendere Umfelderfassung des Kraftfahrzeuges ausführen kann als in einer unbeweglichen Position innerhalb des Gehäuses. Gleichwohl ist es aber auch denkbar, dass der Schlitten nur zum Führen der Kameraeinheit ausgelegt sein kann, wobei die Antriebswirkung direkt an die Kameraeinheit übertragen werden kann. Dabei kann die Kameraeinheit innerhalb des Schlittens zwischen einer Ruheposition und einer Arbeitsposition verfahren.

Des Weiteren kann es im Rahmen der Erfindung vorgesehen sein, dass der Schlitten eine Führung für die Kameraeinheit aufweisen kann. Die Führung kann vorteilhafterweise dafür sorgen, dass die Kameraeinheit stabil mit und/oder stabil relativ zum Schlitten bewegt werden kann. Durch die Führung kann außerdem ein Nachlauf und/oder Rücklauf für die Kameraeinheit bzgl. des Schlittens realisiert werden. Hierbei kann die Führung als Linearführung ausgestaltet sein, so dass die Kameraeinheit längsverschieblich im Schlitten bewegbar ist und insbesondere durch die äußere Krafteinwirkung (das Drücken) auf das Deckelelement in den Schlitten eintaucht.

Zudem ist es denkbar, dass der Schlitten, insbesondere die Führung, zumindest zwei Wände aufweisen kann, die die Kameraeinheit, insbesondere formschlüssig, umschließen können. Somit kann eine stabile Übertragung der Antriebswirkung vom Antrieb über den Schlitten auf die Kameraeinheit ermöglicht werden. Der Vorteil von zwei Wänden, die die Kameraeinheit beidseitig formschlüssig umschließen können, liegt ferner darin, dass somit die Kameraeinheit nicht zur Seite kippen und somit stabil angetrieben werden kann, sei es vom Antrieb über den Schlitten im Normalbetrieb oder durch Druck entgegen der Wirkung des Federelementes relativ zum Schlitten im Notfallbetrieb.

Ferner kann es im Rahmen der Erfindung vorgesehen sein, dass die Kameraeinheit bewegbar im Schlitten zwischen einer Aufnahmelage und einer Rückzugslage aufgenommen sein kann. Die Lageänderung der Kameraeinheit bzgl. des Schlittens, insbesondere zwischen der Aufnahmelage und der Rückzugslage, kann über ein Komprimieren des Federelementes erreicht werden. Dabei ist es denkbar, dass eine Antriebskraft, die im Normalbetrieb auf den Schlitten wirkt, um den Schlitten zwischen der Ruheposition und der Arbeitsposition anzutreiben, nicht bewirken kann, dass das Federelement komprimiert und die Kameraeinheit bzgl. des Schlittens bewegt wird. Die bewegbare Verbindung zwischen dem Schlitten und der Kameraeinheit ist vielmehr für den Notfallbetrieb vorgesehen, wenn große Aufprallkräfte von außen auf das Deckelelement in der Offenstellung wirken, oder wenn beim vereisten Deckelelement die Antriebswirkung durch Verschieben der Kameraeinheit bzgl. des Schlittens im Federelement akkumuliert werden kann. Mit anderen Worten kann die Kameraeinheit im Normalbetrieb sich immer in der Aufnahmelage befinden, in welcher das Federelement zwischen der Kameraeinheit und dem Schlitten als ein starres Übertragungsglied wirken kann, um sich synchron mit dem Schlitten zu bewegen. In die Rückzugslage kann die Kameraeinheit im Notfallbetrieb überführt werden, indem das Federelement komprimiert und die Kameraeinheit relativ zum Schlitten bewegt werden kann, wenn auf das Deckelelement in der Offenstellung von außen Druck ausgeübt wird, oder wenn beim vereisten Deckelelement in der Schließstellung normale Antriebskraft nicht ausreichend ist, um das Deckelelement durch die Kameraeinheit aufzudrücken.

Zudem ist es denkbar, dass die Kameraeinheit schwenkbar, insbesondere drehbar, am Schlitten gelagert sein kann, so dass eine Schwenkführung realisierbar ist. Der Vorteil einer schwenkbaren, insbesondere drehbaren, Lagerung der Kameraeinheit liegt dabei darin, dass die Kameraeinheit im Notfallbetrieb ihre Ausrichtung zum Schlitten verändern kann. Dabei können die Kameraeinheit und der Schlitten drehbar über dieselbe Lagerachse am Gehäuse gelagert sein. Dadurch kann die Lagerung der Kameraeinheit und des Schlittens vereinfacht werden. Weiterhin ist es denkbar, dass die Kameraeinheit durch das Federelement in die Aufnahmelage beaufschlagt sein kann. Durch die Federkraft des Federelementes kann der Vorteil erreicht werden, dass in einem Normallbetrieb und bei einer normalen Antriebskraft, die die Federkraft nicht übersteigt, die Kameraeinheit zusammen mit dem Schlitten bewegt werden kann. Im Notfallbetrieb kann jedoch das Federelement dafür sorgen, dass die Kameraeinheit je nach Notfallsituation nachgiebig hin und zurück im Schlitten verfahren kann. So kann z. B. bei einem Druck von außen auf das Deckelelement in der Offenstallung die Kameraeinheit einen Rücklauf bzgl. des Schlittens erfahren. Bei einem vereisten Deckelelement kann der Schlitten gewöhnlich angetrieben werden, ohne jedoch anfangs die Kameraeinheit mitzubewegen, d. h. der Schlitten kann einen Nachlauf für die Kameraeinheit ermöglichen und solange die Antriebsleistung über das Federelement speichern, bis die gespeicherte Antriebsleistung so groß ist, dass die Kameraeinheit das Deckelelement aufdrücken kann.

Sowohl die erwähnte Linearführung als auch die Schwenkführung zwischen Schlitten und Kameraeinheit können als ein- oder beidseitige Kulissenführung auf einfache Art und Weise technisch realisiert werden.

Weiterhin kann es im Rahmen der Erfindung vorgesehen sein, dass das Federelement zwischen dem Schlitten und dem Deckelelement, insbesondere zwischen dem Schlitten und der Kameraeinheit, angeordnet sein kann. So kann das Federelement zum einen dafür sorgen, dass die Kameraeinheit synchron mit dem Schlitten mitbewegt werden kann und das Deckelelement aufdrücken kann. In der Offenstellung des Deckelelementes kann das Federelement vorteilhafterweise für ein nachgiebiges elastisches Verhalten des Deckelelementes sorgen, sodass durch Druck von außen auf das Deckelelement ein Einfahren des Deckelelementes zumindest zum Teil aus der Offenstellung in die Schließstellung bewirkt werden kann, welches ebenso nachgiebig rückgängig gemacht werden kann, wenn der Druck von außen auf das Deckelelement nicht mehr wirkt.

Des Weiteren ist es denkbar, dass das Federelement in Form einer Druckfeder, einer Schenkelfeder oder einer Blattfeder ausgebildet sein kann. Dabei kann das Federelement einerseits am Schlitten und andererseits an der Kameraeinheit abgestützt sein. Eine jeweilige Bauform des Federelementes kann je nach Bauraumgegebenheiten in der Kameravorrichtung von Vorteil sein. Eine Druckfeder kann vorteilhaft sein, um eine lineare Federkraft zu erzeugen. Dabei ist es denkbar, dass bei einer drehbar gelagerten Kameraeinheit die Druckfeder derart ausgerichtet sein kann, um eine translatorische Federkraft tangential zu einer Bewegungstrajektorie der Kameraeinheit zu erzeugen. Somit kann die Kameraeinheit und darüber das Deckelelement federelastisch belastet und dennoch stabil um die Offenstellung herum bewegt, insbesondere verschwenkt, werden. Eine Schenkelfeder kann vorteilhaft sein, um eine nachgiebige Schwenkbewegung der Kameraeinheit um eine bewegbare Achse am Schlitten zu erzeugen. Eine Blattfeder kann vorteilhaft sein, um ein Durchschlagen des Federelementes bei hoher Last zu verhindern, während bei Normallast eine weiche, komfortable Federung ermöglicht werden kann. Somit kann das Deckelelement abbruchssicher gelagert werden.

Im Rahmen der Erfindung ist es denkbar, dass die Kameraeinheit derart im Schlitten gelagert sein kann, dass im Normalbetrieb die Kameraeinheit mit dem Schlitten verfahrbar sein kann, und dass insbesondere im Notfallbetrieb, bspw. beim vereisten Deckelelement in der Schließstellung, die Kameraeinheit aus einer Aufnahmelage in eine Rückzugslage am Schlitten entgegen der Wirkung einer Spannkraft des Federelementes verfahrbar sein kann, bevor die Kameraeinheit das Deckelelement aus der Schließstellung in die Offenstellung aufdrücken kann. Im Normalbetrieb kann sich die Kameraeinheit synchron mit dem Schlitten bewegen, wobei die Antriebsleistung beinahe ohne Verluste über den Schlitten auf die Kameraeinheit und über die Kameraeinheit auf das Deckelelement übertragen werden kann. Im Notfallbetrieb kann jedoch sichergestellt werden, dass die Kameraeinheit bzgl. des Schlittens einen Nachlauf erfahren kann, um beim vereisten Deckelelement in der Schließstellung die Antriebsleitung im Federelement zu akkumulieren, oder einen Rücklauf ausführen kann, um beim eingedrückten Deckelelement in der Offenstellung sich nachgiebig in Richtung einer Rückzugslage zu verfahren.

Ferner kann die Erfindung vorsehen, dass das Federelement zumindest zum Teil in einer Federführung am Schlitten gelagert sein kann. Somit kann eine stabile Lagerung des Federelementes und indirekt eine stabile Überführung der Kameraeinheit zwischen der Aufnahmelage und der Rückzugslage durch ein geführtes Komprimieren des Federelementes ermöglicht werden.

Weiterhin kann es im Rahmen der Erfindung vorgesehen sein, dass der Schlitten, bevorzugt die Federführung, mindestens einen Anschlag aufweisen kann, an welchem die Kameraeinheit, insbesondere in der Rückzugslage, zur Auflage bringbar sein kann. Vorteilhafterweise kann dadurch bei Druck von außen auf das Deckelelement in der Offenstellung die Bewegung der Kameraeinheit nach hinten begrenzt werden. Außerdem kann dadurch bei einem vereisten Deckelement in der Schließstellung der Vorteil erreicht werden, dass die akkumulierte Antriebskraft direkt auf die Kameraeinheit und darüber auf das Deckelelement übertragen werden kann, sobald die Kameraeinheit am Anschlag zur Auflage gekommen ist und nicht mehr relativ zum Schlitten bewegt werden kann.

Des Weiteren kann es im Rahmen der Erfindung vorgesehen sein, dass der Schlitten durch einen Antrieb zwischen der Ruheposition und der Arbeitsposition antreibbar sein kann. Somit kann eine automatische Überführung des Schlittens zwischen der Ruheposition und der Arbeitsposition bewirkt werden.

Ferner ist es im Rahmen der Erfindung möglich, dass der Antrieb eine Antriebsachse aufweisen kann, die gelenkig mit dem Schlitten verbunden sein kann. Hierzu kann die Antriebsachse eine Kurbel aufweisen, die ein Hebelelement am Schlitten in Bewegung versetzen kann. Dabei kann das Hebelelement schwenkbar sowohl an der Kurbel als auch am Schlitten gelagert sein. Somit kann eine Drehung der Antriebsachse eine Drehung des Schlittens bewirken, um den Schlitten zwischen der Ruheposition und der Arbeitsposition anzutreiben.

Zudem kann es im Rahmen der Erfindung vorgesehen sein, dass das Gehäuse eine Lagerachse aufweisen kann, an welcher der Schlitten und/oder die Kameraeinheit und/oder das Deckelelement schwenkbar, insbesondere drehbar, gelagert sein können/kann. Somit kann die Lagerung des Schlittens und/oder des Deckelelementes und/oder der Kameraeinheit vereinfacht werden. Auch kann somit der Zusammenbau der Kameravorrichtung erleichtert werden. Ferner ist es vorteilhaft, dass die Lagerachse die Bewegung des Schlittens und/oder der Kameraeinheit und/oder des Deckelelementes zumindest zum Teil beeinflussen und vorzugsweise stabilisieren kann.

Im Rahmen der Erfindung kann weiterhin vorteilhaft sein, wenn die Kameraeinheit als ein Antriebselement, insbesondere als ein Übertragungsglied einer Antriebswirkung, für das Deckelelement dienen kann, um das Deckelelement zwischen der Schließstellung und der Offenstellung zu überführen. Somit kann der Vorteil erreicht werden, dass ein einziger Antrieb zum Antreiben des Deckelelementes und der Kameraeinheit verwendet werden kann. Die Kameraeinheit kann zum Öffnen des Deckelelementes das Deckelelement aufdrücken und zum Schließen des Deckelelementes das Deckelelement zurück in die Schließstellung mitziehen.

Des Weiteren ist es denkbar, dass das Deckelelement bewegbar an der Kameraeinheit gelagert sein kann. Dabei können sich die Kameraeinheit und das Deckelelement sowohl im Normallbetrieb als auch im Notfallbetrieb im Wesentlichen synchron bewegen. Eine bewegbare Lagerung des Deckelelementes an der Kameraeinheit kann jedoch den Vorteil mit sich bringen, dass sämtliche Fertigungstoleranzen und Materialsetzungen, bspw. bei Temperaturschwankungen, ausgeglichen werden können, und dass eine nachgiebige Übertragung der Antriebswirkung zwischen der Kameraeinheit und dem Deckelelement ermöglicht werden kann. Ferner ist es denkbar, dass das Deckelelement schwenkbar und/oder linear verschiebbar an der Kameraeinheit gelagert sein kann. Durch eine schwenkbare Lagerung des Deckelelementes an der Kameraeinheit kann die Kameraeinheit das Deckelelement aus der Schließstellung in die Offenstellung an einer Schwenkachse aufdrücken und aus der Offenstellung in die Schließstellung mitziehen. Durch eine lineare Lagerung des Deckelelementes an der Kameraeinheit kann außerdem der Zusammenbau der Kameravorrichtung, insbesondere der Kameraeinheit mit dem Deckelelement erleichtert werden. Gleichwohl ist es aber auch denkbar, dass die Kameraeinheit lose zum Deckelelement gelagert sein kann, um das Deckelelement nur durch ein Drücken an einer Innenseite des Deckelelementes aus der Schließstellung in die Offenstellung zu überführen. Zurück aus der Offenstellung in die Schließstellung kann das Deckelelement selbstständig oder unter Wirkung eines separaten Federelementes am Gehäuse verfahren.

Ferner kann es im Rahmen der Erfindung vorgesehen sein, dass die Kameraeinheit derart mit dem Deckelelement verbunden sein kann, dass die Kameraeinheit durch ein Drücken von außen am Deckelelement in der Offenstellung entgegen der Wirkung einer Spannkraft des Federelementes aus einer Aufnahmelage in eine Rückzugslage bewegbar sein kann. Dabei kann das Deckelelement zusammen mit der Kameraeinheit entgegen der Wirkung der Federkraft in Richtung der Schließstellung verfahren. Dadurch kann das Deckelelement zumindest vorübergehend bündiger zur Fahrzeugoberfläche positioniert werden, um einen Fußgänger bei einem frontalen Zusammenstoß mit dem Kraftfahrzeug vor Verletzungen am starr abstehenden Deckelelement zu schützen.

Weiterhin kann es im Rahmen der Erfindung vorgesehen sein, dass zwischen dem Deckelelement und der Kameraeinheit ein Übertragungsmittel vorgesehen sein kann, wobei insbesondere das Übertragungsmittel schwenkbar und/oder linear verschiebbar mit der Kameraeinheit verbunden sein kann. Das Übertragungsmittel kann vorteilhafterweise zur Lagerung des Deckelelementes an der Kameraeinheit und zum Übertragen der Antriebswirkung zwischen dem Deckelelement und der Kameraeinheit dienen. Das Übertragungsmittel kann zum einen dafür sorgen, dass sich die Kameraeinheit und das Deckelelement sowohl im Normallbetrieb als auch im Notfallbetrieb im Wesentlichen synchron zueinander bewegen können. Zum anderen kann das Übertragungsmittel eine gelenkige Verbindung zwischen der Kameraeinheit und dem Deckelelement herstellen, um das Deckelelement einfacher an der Kameraeinheit zu montieren und im montierten Zustand Fertigungstoleranzen und Materialsetzungen auszugleichen. Das Übertragungsmittel kann in Form eines Stiftes ausgebildet sein, welcher eine Schwenkachse für das Deckelelement relativ zur Kameraeinheit definieren kann.

Zudem kann die Kameraeinheit ein Antriebselement aufweisen, welches mit dem Deckelelement, insbesondere mit dem Übertragungsmittel zusammenwirken kann, wobei insbesondere das Antriebselement eine Führungskulisse für das Deckelelement, insbesondere für das Übertragungsmittel, aufweisen kann. Das Antriebselement, insbesondere mit der Führungskulisse, schafft vorteilhafterweise ein komplementäres Element zum Übertragungsmittel am Deckelelement. Das Antriebselement kann dabei als eine Lagerstelle für das Übertragungsmittel dienen. Bei der Montage des Deckelelementes an der Kameraeinheit kann das Übertragungsmittel in die Führungskulisse eingesetzt werden und an die Stelle in der Führungskulisse verfahren werden, an der das Antriebselement zur Auflage in der Innenseite des Deckelelementes kommt. Auf diese Weise kann eine einfache Montage der Kameravorrichtung ermöglicht werden.

Des Weiteren kann das Antriebselement ein Druckmittel aufweisen, welches von Innen am Deckelelement zur Auflage bringbar sein kann. Das Druckmittel kann als ein Stößel das Deckelelement von Innen aufdrücken. Somit kann auf eine einfache Weise eine funktionale Verbindung zwischen der Kameraeinheit und dem Deckelelement hergestellt werden, sodass die Kameraeinheit das Deckelelement aus der Schließstellung in die Offenstellung aufdrücken kann. Das Übertragungsmittel am Deckelelement, welches in der Führungskulisse am Antriebselement der Kameraeinheit gehalten werden kann, kann das Deckelelement aus der Offenstellung in die Schließstellung mitziehen.

Ferner ist es denkbar, dass am Gehäuse eine Waschdüse zum Reinigen einer Kameralinse der Kameraeinheit vorgesehen sein kann. Die Waschdüse kann bei Bedarf eingesetzt werden, um die Kameralinse zu reinigen. Somit kann die Kameraeinheit ein gutes Kamerabild trotz hoher Verschmutzungsgefahr bei der Kameravorrichtung liefern.

Ferner wird die erfindungsgemäße Aufgabe durch ein Verfahren mit den Merkmalen des unabhängigen Verfahrensanspruches gelöst. Hierbei kann das Verfahren zum Betätigen der erfindungsgemäßen Kameravorrichtung dienen, die wie oben beschrieben ausgestaltet sein kann. Das Verfahren sieht dabei vor, dass das Deckelelement belastet durch zumindest ein Federelement gelagert sein kann, sodass das Deckelelement durch ein Drücken von außen zumindest zum Teil von der Offenstellung in die Schließstellung überführt wird. Dabei werden die gleichen Vorteile erreicht, die oben in Verbindung mit der erfindungsgemäßen Kameravorrichtung beschrieben wurden.

Weiterhin kann das Verfahren vorsehen, dass das Deckelelement durch die Kameraeinheit zwischen der Schließstellung und der Offenstellung angetrieben werden kann. Dabei kann das Deckelelement zusammen mit der Kameraeinheit bewegt werden, ohne eine relative Ausrichtung zur Kameraeinheit zu wechseln. Dies gilt sowohl für den Normalbetrieb als auch für den Notfallbetrieb.

Des Weiteren kann das Verfahren vorsehen, dass im Notfallbetrieb, bspw. beim vereisten Deckelelement in der Schließstellung, die Kameraeinheit, bspw. relativ zum Schlitten, aus einer Aufnahmelage in eine Rückzugslage entgegen der Wirkung einer Spannkraft des Federelementes verfahren werden kann, bevor die Kameraeinheit das Deckelelement aus der Schließstellung in die Offenstellung aufdrücken kann. Somit kann der Vorteil erreicht werden, dass mit einem vorhandenen Antrieb, ohne die Antriebsleistung zu erhöhen, die abgegebene Antriebsenergie im Federelement akkumuliert werden kann, bis die gespeicherte Antriebsenergie groß genug ist, um das Deckelelement, sogar im vereisten Zustand, aufzudrücken.

Erfindungsgemäß können die Merkmale der Beschreibung und der Ansprüche der erfindungsgemäßen Kameravorrichtung sowie des erfindungsgemäßen Verfahrens zum Betätigen der Kameravorrichtung sowohl einzeln für sich als auch in den verschiedensten Kombinationen erfindungswesentlich sein. Weitere, die Erfindung verbessernde Maßnahmen werden nachstehend gemeinsam in der Beschreibung des bevorzugten Ausführungsbeispiels der Erfindung anhand der Figuren näher dargestellt. Es zeigen:
- Figur 1: die erfindungsgemäße Kameravorrichtung in einer Explosionsansicht,
- Figur 2: eine Schnittdarstellung der erfindungsgemäßen Vorrichtung in einer Schließstellung des Deckelelementes,
- Figur 3: eine Schnittdarstellung der erfindungsgemäßen Vorrichtung in einer Offenstellung des Deckelelementes und
- Figur 4: eine Schnittdarstellung der erfindungsgemäßen Vorrichtung in einer Zwischenstellung des Deckelelementes zwischen der Offenstellung und der Schließstellung.

In den Figuren werden für die gleichen technischen Merkmale der Erfindung identische Bezugszeichen verwendet.

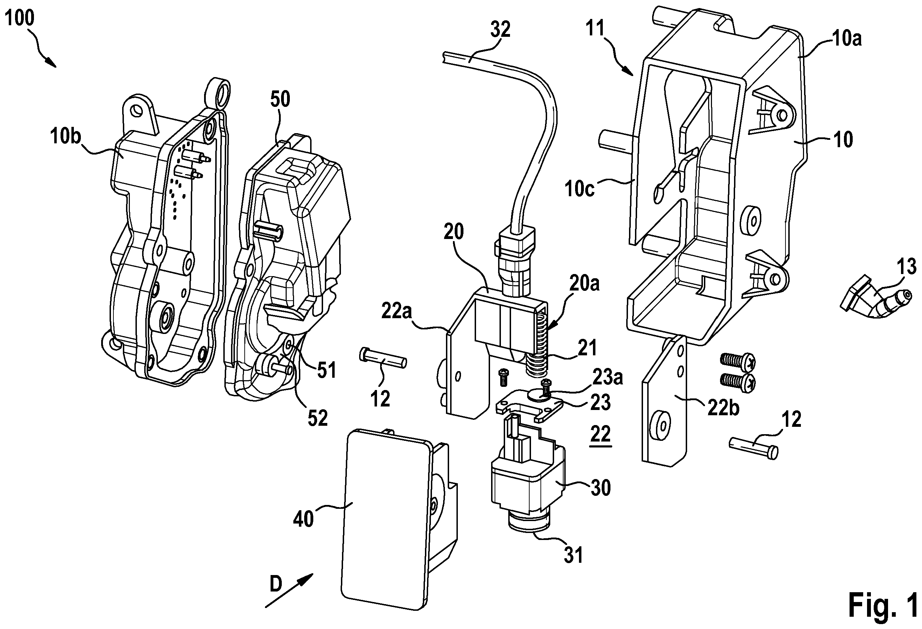

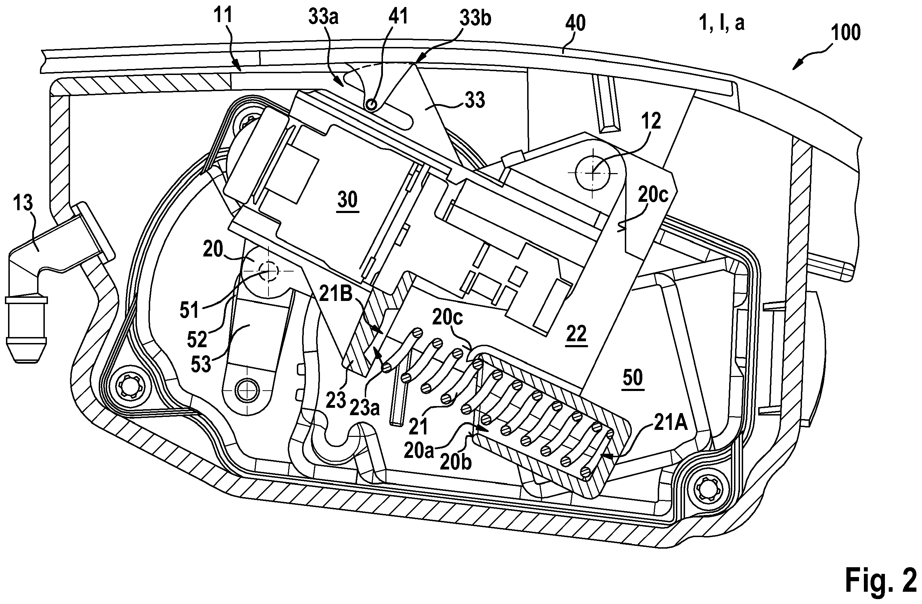

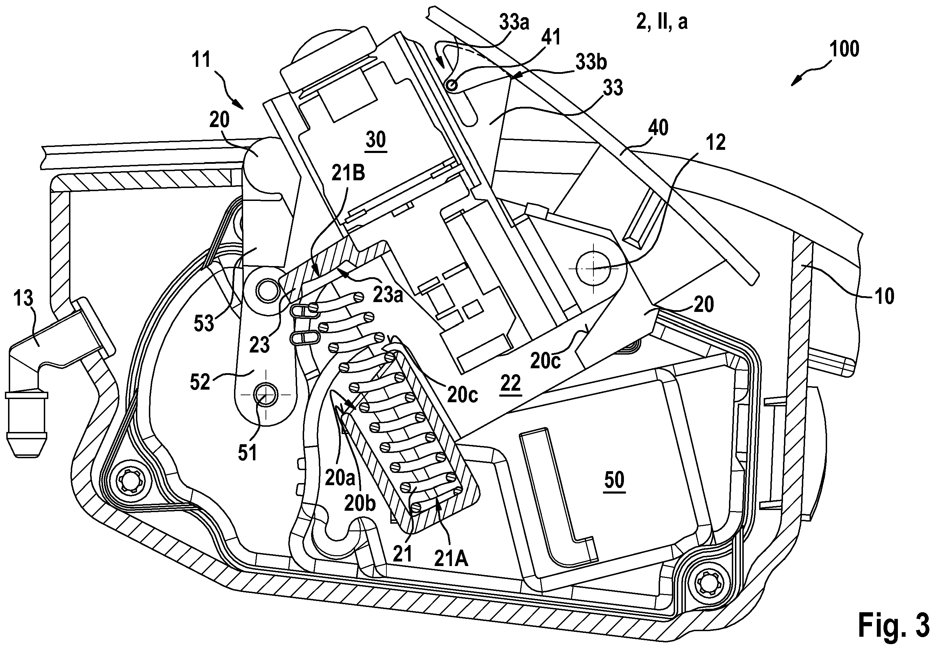

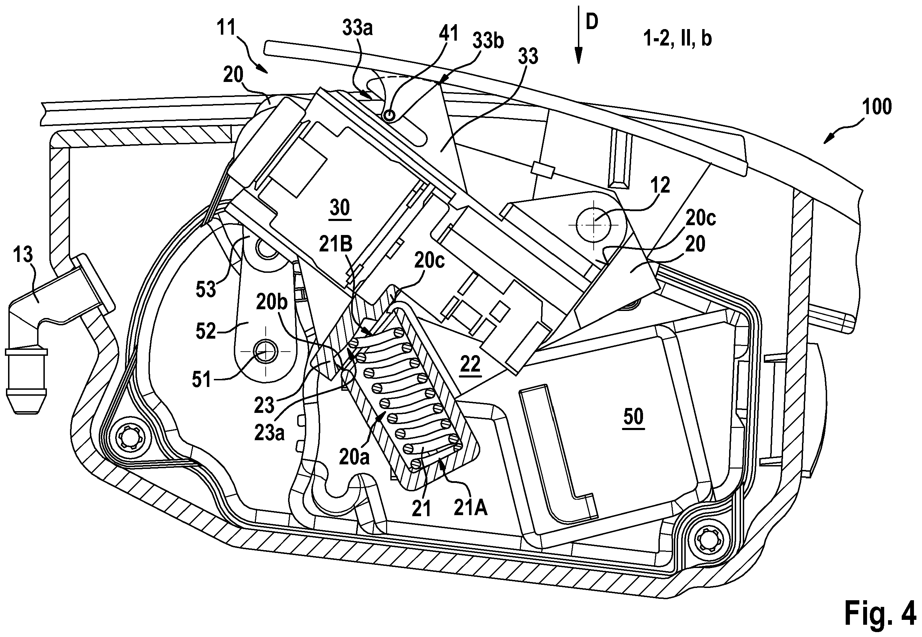

Figur 1 zeigt eine erfindungsgemäße Kameravorrichtung 100 zur Bilderfassung des Außenbereiches eines Kraftfahrzeuges, wobei das Kraftfahrzeug im Ganzen aus Einfachheitsgründen nicht dargestellt ist. Die erfindungsgemäße Kameravorrichtung 100 kann bspw. als eine Frontkameravorrichtung 100 ausgebildet und im Stoßfänger des Kraftfahrzeuges angeordnet sein. Die Kameravorrichtung 100 umfasst dabei ein Gehäuse 10, in welchem ein Schlitten 20 für eine Kameraeinheit 30 bewegbar zwischen zwei Positionen I, II aufgenommen ist, nämlich einer Ruheposition I, die nachfolgend in der Figur 2 gezeigt ist, in welcher die Kameraeinheit 30 durch den Schlitten 20 im Gehäuse 10 aufgenommen ist, und einer Arbeitsposition II, die in den Figuren 3 und 4 gezeigt ist, in welcher die Kameraeinheit 30 durch den Schlitten 20 zumindest zum Teil aus einer Öffnung 11 im Gehäuse 10 herausfahrbar ist. Die Öffnung 11 ist vorderseitig im Gehäuse 10 ausgebildet, wobei durch die Öffnung 11 eine Bilderfassung für die Kameraeinheit 30 möglich ist.

Das erfindungsgemäße Gehäuse 10 ist dabei zweiteilig mit einer ersten Gehäuseschale 10a für die Kameraeinheit 30 und den Schlitten 20 und einer zweiten Gehäuseschale 10b für einen Antrieb 50 für den Schlitten 20 ausgeführt und weist eine Trennwand 10c zwischen der Kameraeinheit 30 und dem Antrieb 50 auf.

Der Antrieb 50 weist eine Antriebsachse 51 auf, an welcher eine Kurbel 52 drehfest angebracht ist, die gelenkig mit einem Hebelelement 53 verbunden ist, welche in den Figuren 2 bis 4 zu erkennen ist und welche mit dem Schlitten 20 verbunden ist. Auf diese Weise kann der Schlitten 20 zwischen der Ruheposition I und der Arbeitsposition II angetrieben werden.

Die Öffnung 11 im Gehäuse 10 wird durch ein Deckelelement 40 in einer Schließstellung 1, die in Figur 2 gezeigt ist, verschlossen und in einer Offenstellung 2, die in Figur 3 gezeigt ist, freigegeben. Wie in Figur 2 zu erkennen ist, befindet sich die Kameraeinheit 30 in der Schließstellung 1 des Deckelelementes 40 von außen unzugänglich hinter dem Deckelelement 40. Wie ferner aus der Figur 3 zu erkennen ist, kann die Kameraeinheit 30 mithilfe des Schlittens 20 in der Offenstellung 2 des Deckelelementes 40 zumindest zum Teil aus der Öffnung 11 im Gehäuse 10 herausfahren, um einen größeren Aufnahmewinkel durch eine Kameralinse 31 um das Kraftfahrzeug herum zu erfassen. Die Kameraeinheit 30 wird mithilfe eines Steckers mit einem Kabel 32 an das elektrische Bordnetz des Kraftfahrzeuges angeschlossen.

Dabei sind der Schlitten 20, die Kameraeinheit 30 und das Deckelelement 40 drehbar an einer Lagerachse 12 am Gehäuse 10 abgestützt. Wenn der Schlitten 20 durch den Antrieb 50 in Bewegung versetzt wird, werden in einem Normalbetrieb die Kameraeinheit 30 und das Deckelelement 40 mitbewegt, insbesondere um die Lagerachse 12 verschwenkt. Allerdings wird in einem Notfallbetrieb die relative Bewegung der Kameraeinheit 30 bzw. des Deckelelementes 40 zum Schlitten 20 erlaubt, wie es im Nachfolgenden erklärt wird.

Die Kameraeinheit 30 kann dabei derart bewegbar mit dem Schlitten 20 verbunden sein, dass im Normalbetrieb der Kameravorrichtung 100 die Kameraeinheit 30 mit dem Schlitten 20 verfahrbar sein kann, wohingegen im Notfallbetrieb, bspw. bei einem Druck D von außen auf das Deckelelement 40 in der Offenstellung 2 oder beim vereisten Deckelelement 40 in der Schließstellung 1, die Kameraeinheit 30 relativ zum Schlitten 20 verfahrbar sein kann. Im Normalbetrieb kann sich die Kameraeinheit 30 synchron mit dem Schlitten 20 bewegen, wobei die Antriebsleistung beinahe ohne Verluste über den Schlitten 20 auf die Kameraeinheit 30 und über die Kameraeinheit 30 auf das Deckelelement 40 übertragen werden kann. Im Notfallbetrieb kann jedoch sichergestellt werden, dass die Kameraeinheit 30 bzgl. des Schlittens 20 einen Nachlauf und/oder einen Rücklauf erfahren kann.

Der Schlitten 20 weist eine Führung 22 für die Kameraeinheit 30 auf, um die Kameraeinheit 30 einerseits geschützt aufzunehmen und andererseits bewegbar relativ zum Schlitten 20 zu lagern. Die Führung 22 sorgt dafür, dass die Kameraeinheit 30 im Normallbetrieb stabil mit dem Schlitten 20 oder im Notfallbetrieb stabil relativ zum Schlitten 20 bewegt werden kann. Die Führung 22 kann außerdem einen Nachlauf und/oder Rücklauf für die Kameraeinheit 30 bzgl. des Schlittens 20 im Notfallbetrieb ermöglichen, wie es ferner anhand der Figuren 2 bis 4 im Detail erklärt wird.

Die Führung 22 ist durch zwei Wände 22a, 22b gebildet, die die Kameraeinheit 30 von zwei gegenüberliegenden Seiten formschlüssig umschließen können, die sich senkrecht zu einer Bewegungsrichtung der Kameraeinheit 30 erstrecken. Somit kann ermöglicht werden, dass die Kameraeinheit 30 bei ihrer Bewegung nicht zur Seite kippen und somit einen stabilen Bewegungsablauf aufweisen kann, wenn sich die Kameraeinheit 30 mit dem Schlitten 20 bewegt oder wenn die Kameraeinheit 30 relativ zum Schlitten 20 bewegt wird.

Erfindungsgemäß ist ein Federelement 21 zwischen dem Schlitten 20 und der Kameraeinheit 30 vorgesehen. Das Federelement 21 kann durch Komprimieren eine relative Bewegung der Kameraeinheit 30 zum Schlitten 20 ermöglichen. Das erfindungsgemäße Deckelelement 40 kann von der Kameraeinheit 30 angetrieben werden und sich synchron mit der Kameraeinheit 30 sowohl im Normalbetrieb als auch im Notfallbetrieb bewegen, sodass das Deckelement 40 ebenfalls belastet durch das Federelement 21 gelagert ist, welches von einer Antriebsseite 21A am Schlitten 20 und von einer Deckelseite 21 B an der Kameraeinheit 30 abgestützt ist. Das Federelement 21 sorgt erfindungsgemäß dafür, sodass das Deckelelement 40 durch ein Drücken D von außen zumindest zum Teil von der Offenstellung 2 in die Schließstellung 1 überführbar ist, wie es in der Figur 4 gezeigt ist.

Das erfindungsgemäße Federelement 21 ist dabei derart steif bzw. mit einer derart hohen Federkonstante ausgeführt, dass das Federelement 21 im normalen Betrieb der Kameravorrichtung 100 seine Form nicht verändert verändern kann. Wie die Figuren 2 und 3 zeigen, wird das Federelement 21 durch das Überführen des Deckelelementes 40 zwischen der Schließstellung 1 und der Offenstellung 2 nicht komprimiert, was einem Normalbetrieb der Kameravorrichtung 100 entspricht. Dabei wird das Federelement 21 formunverändert mit dem Deckelelement 40 zwischen der Schließstellung 1 und der Offenstellung 2 bzw. mit der Kameraeinheit 30 verfahren. Das Federelement 21 ist von der Deckelseite 21B an einem Stützelement 23 in einem Federteller 23a abgestützt, wobei das Stützelement 23 fest mit der Kameraeinheit 30 verbunden ist. Von einer anderen Seite, d. h. von der Antriebsseite 21A, ist das Federelement 21 am Schlitten 20 für die Kameraeinheit 30 abgestützt, relativ zu welchem die Kameraeinheit 30 sich bewegen kann.

Im Normalbetrieb der Kameravorrichtung 100, der beispielhaft in den Figuren 2 und 3 gezeigt ist, wirkt das Federelement 21 als ein starres Übertragungsglied zwischen dem Schlitten 20 bzw. einer Federführung 20a, die fest am Schlitten 20 befestigt ist, und der Kameraeinheit 30 bzw. dem Stützelement 23, das fest mit der Kameraeinheit 30 verbunden ist. Dabei können die Antriebskräfte, die im Normalbetrieb der Kameravorrichtung 100 auf das Federelement 21 wirken, die Form des Federelementes 21 nicht beeinflussen.

Vorteilhafterweise wird das Federelement 21 nur im Notfallbetrieb beansprucht bzw. komprimiert. In einer Notfallsituation der Kameravorrichtung 100, die beispielhaft in der Figur 4 gezeigt ist, kann das Federelement 21 als ein elastisches Element agieren und eine Aufprallenergie absorbieren, die bei einem Stoß bzw. Druck D von außen auf das Deckelelement 40 in der Offenstellung 2 bei einer Kollision, bspw. mit einem Fußgänger, wirken kann. Dabei wird das Federelement 21, wie gezeigt in der Figur 4, zusammengedrückt. Durch Zusammendrücken des Federelementes 21 kann das Deckelelement 40 bündiger zur Fahrzeugoberfläche in einer Zwischenstellung zwischen der Offenstellung 2 und der Schließstellung 1 angeordnet werden, um einen Fußgängerschutz bei einem offenen Deckelelement 40 zu realisieren. Die Gefahr, sich an einem starr abstehenden Deckelelement 40 in der Offenstellung 2 zu verletzten, wird durch ein erfindungsgemäßes Deckelelement 40, das im Notfallbetrieb federbelastet ist, deutlich reduziert. Ein nachgiebiges Verhalten des Deckelelementes 40 in der Offenstellung 2 sorgt außerdem dafür, dass die Aufprallkräfte durch Komprimieren des Federelementes 21 aufgenommen werden können. Wenn der Druck D von außen am Deckelelement 40 nicht mehr wirkt, sorgt das Federelement 21 beim Entspannen dafür, dass das Deckelelement 40 zurück in die Offenstellung 2 überführt wird. Ein solches unter Krafteinwirkung federbelastetes bzw. nachgiebig gelagertes Deckelelement 40 in der Offenstellung 2 ist außerdem weniger abbruchgefährdet als ein gewöhnliches, starres Deckelelement 40 in der Offenstellung 2.

Eine andere Notfallsituation, neben der in Figur 4 gezeigten, ist bspw. denkbar, wenn das Deckelelement 40 in der Schließstellung 1 zugefroren ist. Normale Antriebskräfte können dabei nicht ausreichen, um das Eis zwischen der Öffnung 11 im Gehäuse 10 und dem Deckelelement 40 zu brechen und das Deckelelement 40 zu öffnen. In einer solchen Notfallsituation kann der Antrieb 50 den Schlitten 20 bewegen, ohne jedoch die Kameraeinheit 30 bewegen zu können, da die Kameraeinheit 30 am zugefrorenen Deckelelement 40 stehen bleibt. Dabei wird das Federelement 21 zwischen dem Schlitten 20 und der Kameraeinheit 30 solange komprimiert, bis die im Federelement 21 gespeicherte Antriebsenergie ausreichend groß ist, um das Eis zu brechen und das Deckelelement 40 in die Offenstellung 2 zu überführen. Somit kann eine sichere Funktionsweise der Kameravorrichtung 100 und insbesondere des Deckelelementes 40 in jeder Betriebssituation der Kameravorrichtung 100, sogar im Notfallbetrieb, gewährleitstet werden. Das Federelement 21 dient somit vorteilhafterweise als ein Speicherelement für die Antriebsenergie, sogar bei einer konstanten Antriebsleitung des Antriebes 50, die an sich, d. h. ohne einen Zwischenspeicher wie das Federelement 21, nicht ausreichend wäre, um das Eis zu brechen. Durch eine relative Bewegung des Schlittens 20 zur Kameraeinheit 30 kann das Federelement 21 beansprucht und die Antriebsenergie akkumuliert werden bis die gespeicherte Antriebsenergie ausreichend groß ist, um das Eis zu brechen. Wenn die gespeicherte Antriebsenergie also groß genug ist, kann sich das Federelement 21 sprungartig entspannen und die gespeicherte Antriebsenergie freisetzen, wodurch das Deckelelement 40 sogar im gefrorenem Zustand geöffnet werden kann.

Im dargestellten Ausführungsbeispiel der Erfindung ist das Federelement 21 in Form einer Druckfeder 21 ausgebildet. Allerdings ist es ebenfalls denkbar, dass das Federelement 21 zwischen dem Schlitten 20 und der Kameraeinheit 30 in Form einer Schenkelfeder oder einer Blattfeder ausgebildet sein kann. Das gezeigte Federelement 21 in Form einer Druckfeder 21 kann vorteilhaft sein, um eine lineare Federkraft tangential zu einer Bewegungstrajektorie der Kameraeinheit 30 um die Lagerachse 12 zu erzeugen. Dabei ist das Federelement 21 in der Federführung 20a aufgenommen, die am Schlitten 20 befestigt ist, um eine stabile Lagerung und indirekt ein stabiles Komprimieren des Federelementes 21 zu ermöglichen.

An der Deckelseite 21B des Federelementes 21 bzw. am äußeren Ende der Federführung 20a ist ein Anschlag 20b vorgesehen, an welchem die Kameraeinheit 30 bzw. das Stützelement 23 für die Kameraeinheit 30 zur Auflage gebracht werden kann, wenn das Federelement 21 ausreichend komprimiert ist, wie es beispielhaft in der Figur 4 gezeigt ist. Der Anschlag 20b kann die Bewegung der Kameraeinheit 30 und somit des Deckelelementes 40 aus Offenstellung 2 in die Zwischenstellung gemäß der Figur 4 nach hinten begrenzen, und zwar bis zu der Stelle, wo die Kameraeinheit 30 nicht mehr bzgl. des Schlittens 20 bewegt werden kann. Ein oder vorzugsweise zwei entsprechende Anschläge 20c können am Schlitten 20 vorgesehen sein, um die Bewegung der Kameraeinheit 30 relativ zum Schlitten 20 zu begrenzen. Bei einem vereisten Deckelelement 40, kann ein Anliegen der Kameraeinheit 30 am Anschlag 20b, 20c bewirken, dass die durch das Federelement 21 akkumulierte Antriebskraft direkt auf die Kameraeinheit 30 und darüber auf das Deckelelement 40 übertragen werden kann.

Vorteilhafterweise kann das Deckelelement 40 alleine durch die Kameraeinheit 30 angetrieben werden, um im Normalbetrieb der Kameravorrichtung 100 zwischen der Offenstellung 2 und der Schließstellung 1 überführt zu werden. Die Kameraeinheit 30 kann dabei die Wirkung des Antriebes 50, der zum Antreiben des Schlittens 20 dient, über das im Normalbetrieb starre Federelement 21 auf das Deckelelement 40 übertragen. Die Kameraeinheit 30 und das Deckelelement 40 bewegen sich allerdings sowohl im Normalbetrieb als auch im Notfallbetrieb der Kameravorrichtung 100 synchron zueinander, ohne eine relative Ausrichtung zueinander zu verändern.

Wie ferner aus den Figuren 2 oder 3 im Vergleich zu Figur 4 zu erkennen ist, ist die Kameraeinheit 30 bewegbar zwischen einer Aufnahmelage a der Figuren 2 und 3 und einer Rückzugslage b der Figur 4 aufgenommen. Die Lageänderung der Kameraeinheit 30 relativ zum Schlitten 20 wird über ein Komprimieren des Federelementes 21 erreicht. Die bewegbare Verbindung zwischen dem Schlitten 20 und der Kameraeinheit 30 ist allerdings nur für den Notfallbetrieb der Kameravorrichtung 100 vorgesehen. Eine Notfallsituation ist dabei bspw. denkbar, wenn größere Aufprallkräfte von außen auf das Deckelelement 40 in der Offenstellung 2 einwirken, als im Normalbetrieb der Kameravorrichtung 100 durch den Antrieb 50 bereitgestellt werden können. Eine andere Notfallsituation ist denkbar, wenn ein Spalt zwischen der Öffnung 11 und dem Deckelelement 40 zugefroren ist und die Antriebswirkung des Antriebs 50 alleine nicht vermag, das Eis aufzubrechen. In solcher Situation kann der Antrieb 50 mit einer vorhandenen Antriebsleistung den Schlitten 20 antreiben und relativ zur Kameraeinheit 30 verschieben, die an einem zugefrorenen Deckelelement 40 stecken bleibt, sodass das Federelement 21 nach und nach zusammengedrückt werden kann, und zwar solange bis im Federelement 21 ausreichend Antriebskraft akkumuliert werden kann, um das Eis zu brechen und das Deckelelement 40 über die Kameraeinheit 30 aufzudrücken. Anfangs kann sich die Kameraeinheit 30 in der Aufnahmelage a der Figur 2 befinden. Durch Zusammendrücken des Federelementes 21 kann die Kameraeinheit 30 in die Rückzugslage b (s. die Figur 4) überführt werden.

Im dargestellten Beispiel der Figuren 2 bis 4 ist die Kameraeinheit 30 schwenkbar, insbesondere drehbar, am Schlitten 20 gelagert, und zwar an derselben Lagerachse 12 wie der Schlitten 20 selbst. Im Normalbetrieb der Kameravorrichtung 100 kann die Kameraeinheit 30 ihre Ausrichtung zum Schlitten 20 aufgrund des steifen Federelementes 21 nicht verändern. Nur im Notfallbetrieb, wenn auf die Kameraeinheit 30 größere Kräfte als Antriebskräfte wirken, kann das Federelement 21 komprimiert werden, wodurch die Kameraeinheit 30 relativ zum Schlitten 20 bewegt werden kann.

Ferner ist es aus den Figuren 2 bis 4 ersichtlich, dass das Deckelelement 40 bewegbar an der Kameraeinheit 30 gelagert sein kann. Dies kann zum Ausgleichen von Toleranzen und zu einer einfacheren Montage des Deckelelementes 40 an der Kameraeinheit 30 vorteilhaft sein. Hierzu ist zwischen dem Deckelelement 40 und der Kameraeinheit 30 ein Übertragungsmittel 41 in Form eines Stiftes vorgesehen, welches schwenkbar und/oder linear verschiebbar in einer Führungskulisse 33a der Kameraeinheit 30 aufgenommen ist. Im Normalbetrieb der Kameravorrichtung 100 wird das Übertragungsmittel 41 in der Führungskulisse 33a der Kameraeinheit 30 nicht verschoben.

Das Übertragungsmittel 41 dient einerseits zur Lagerung des Deckelelementes 40 an der Kameraeinheit 30 und andererseits zum Übertragen der Antriebswirkung von der Kameraeinheit 30 auf das Deckelelement 40. Komplementär zum Übertragungsmittel 41 ist an der Kameraeinheit 30 ein Antriebselement 33 in Form eines hervorstehenden Dreiecks ausgebildet. Das Antriebselement 33 kann mit einer äußersten Seite einerseits an einer Innenseite des Deckelelementes 40 andrücken, um das Deckelelement 40 aus der Schließstellung 1 in die Offenstellung 2 zu überführen, und andererseits mit dem Übertragungsmittel 41 zusammenwirken, um das Deckelelement 40 aus der Offenstellung 2 in die zu Schließstellung 1 zu ziehen. Am Antriebselement 33 ist die Führungskulisse 33a für Übertragungsmittel 41 ausgebildet. An der äußersten Stelle des Antriebselementes 33, die dem Deckelelement 40 zugewandt ist, ist ein, bspw. bogenförmiges, Druckmittel 33b, vorgesehen, welches von Innen am Deckelelement 40 zur Auflage bringbar ist. Das Druckmittel 33b dient als ein Stößel, um das Deckelelement 40 aus der Schließstellung 1 in die Offenstellung 2 aufzudrücken. Mithilfe des Antriebselementes 33 und des Übertragungsmittels 41 kann somit auf eine einfache Weise eine funktionale Verbindung zwischen der Kameraeinheit 30 und dem Deckelelement 40 bereitgestellt werden, sodass die Kameraeinheit 30 das Deckelelement 40 zwischen der Schließstellung 1 und der Offenstellung 2 antreiben kann.

Zudem kann am Gehäuse 10 eine Waschdüse 13 zum Reinigen der Kameralinse 31 vorgesehen sein kann. Die Waschdüse 13 kann bei Bedarf aktiviert werden, um die Kameralinse 31 zu reinigen.

### Bezugszeichenliste

- 100: Kameravorrichtung

- 10: Gehäuse
- 10a: erste Gehäuseschale
- 10b: zweite Gehäuseschale
- 10c: Trennwand
- 11: Öffnung
- 12: Lagerachse
- 13: Waschdüse

- 20: Schlitten
- 20a: Federführung
- 20b: Anschlag an der Federführung für die Kameraeinheit
- 20c: Anschlag am Schlitten für die Kameraeinheit
- 21: Federelement
- 21A: Antriebsseite des Federelementes
- 21B: Deckelseite des Federelementes
- 22: Führung für die Kameraeinheit
- 22a: Wand
- 22b: Wand
- 23: Stützelement
- 23a: Federteller

- 30: Kameraeinheit
- 31: Kameralinse
- 32: Kabel
- 33: Antriebselement
- 33a: Führungskulisse
- 33b: Druckmittel
- 40: Deckelelement
- 41: Übertragungsmittel

- 50: Antrieb
- 51: Antriebsachse
- 52: Kurbel
- 53: Hebelelement

- 1: Schließstellung des Deckelelementes
- 2: Offenstellung des Deckelelementes

- I: Ruheposition des Schlittens
- II: Arbeitsposition des Schlittens

- a: Aufnahmelage der Kameraeinheit
- b: Rückzugslage der Kameraeinheit

- D: Druck, Stoß am Deckelelement von außen

## Patentansprüche

1. Kameravorrichtung (100) zur Bilderfassung des Außenbereiches eines Kraftfahrzeuges, mit einem Gehäuse (10), in weichem eine Kameraeinheit (30) aufgenommen ist,
und einem Deckelelement (40),
welches bewegbar zwischen zumindest zwei Stellungen (1, 2) gelagert ist, nämlich:
einer Schließstellung (1), in welcher das Deckelelement (40) eine Öffnung (11) im Gehäuse (10) verschließt, durch welche eine Bilderfassung für die Kameraeinheit (30) möglich ist,
und einer Offenstellung (2), in welcher das Deckelelement (40) die Öffnung (11) im Gehäuse (10) zumindest zum Teil freigibt,
wobei in der Schließstellung (1) des Deckelelementes (40) die Kameraeinheit (30) von außen unzugänglich sich hinter dem Deckelelement (40) befindet und in der Offenstellung (2) des Deckelelementes (40) die Bilderfassung für die Kameraeinheit (30) durch die Öffnung (11) durchführbar ist,
**dadurch gekennzeichnet,**
**dass** das Deckelelement (40) belastet durch zumindest ein Federelement (21) gelagert ist, sodass das Deckelelement (40) durch eine Druckkraft (D) von außen zumindest zum Teil von der Offenstellung (2) in die Schließstellung (1) überführbar ist,
und **dass** die Kameraeinheit (30) derart mit dem Deckelelement (40) verbunden ist, dass die Kameraeinheit (30) durch eine Druckkraft (D) von außen am Deckelelement (40) in der Offenstellung (2) entgegen der Wirkung einer Spannkraft des Federelementes (21) aus einer Aufnahmelage (a) in eine Rückzugslage (b) bewegbar ist.

2. Kameravorrichtung (100) nach Anspruch 1,
**dadurch gekennzeichnet,**
**dass** ein Schlitten (20) für die Kameraeinheit (30) vorgesehen ist,
wobei insbesondere der Schlitten (20) bewegbar zwischen zumindest zwei Positionen (I, II), insbesondere am Gehäuse (10), gelagert ist, nämlich:
einer Ruheposition (I), in welcher die Kameraeinheit (30) durch den Schlitten (20) im Gehäuse (10) aufgenommen ist,
und einer Arbeitsposition (II), in welcher die Kameraeinheit (30) durch den Schlitten (20) zumindest zum Teil aus der Öffnung (11) des Gehäuses (10) herausfahrbar ist.

3. Kameravorrichtung (100) nach Anspruch 1 oder 2,
**dadurch gekennzeichnet,**
**dass** der Schlitten (20) eine Führung (22) für die Kameraeinheit (30) aufweist,
wobei insbesondere der Schlitten (20), bevorzugt die Führung (22), zumindest zwei Wände (22a, 22b) aufweist, die die Kameraeinheit (30), insbesondere formschlüssig, umschließen.

4. Kameravorrichtung (100) nach einem der vorgenannten Ansprüche,
**dadurch gekennzeichnet,**
**dass** die Kameraeinheit (30) bewegbar im Schlitten (20) zwischen einer Aufnahmelage (a) und einer Rückzugslage (b) aufgenommen ist,
wobei insbesondere die Kameraeinheit (30) schwenkbar, insbesondere drehbar, am Schlitten (20) gelagert ist,
wobei bevorzugt die Kameraeinheit (30) durch das Federelement (21) in die Aufnahmelage (a) beaufschlagt ist.

5. Kameravorrichtung (100) nach einem der vorgenannten Ansprüche,
**dadurch gekennzeichnet,**
**dass** das Federelement (21) zwischen dem Schlitten (20) und dem Deckelelement (40), insbesondere zwischen dem Schlitten (20) und der Kameraeinheit (30), angeordnet ist,
wobei insbesondere das Federelement (21) in Form einer Druckfeder, einer Schenkelfeder oder einer Blattfeder ausgebildet ist.

6. Kameravorrichtung (100) nach einem der vorgenannten Ansprüche,
**dadurch gekennzeichnet,**
**dass** die Kameraeinheit (30) derart im Schlitten (20) gelagert ist, dass im Normalbetrieb die Kameraeinheit (30) mit dem Schlitten (20) verfahrbar ist,
wobei insbesondere in einem Notfallbetrieb, bspw. beim vereisten Deckelelement (40) in der Schließstellung (1), die Kameraeinheit (30) aus einer Aufnahmelage (a) in eine Rückzugslage (b) am Schlitten (20) entgegen die Wirkung einer Spannkraft des Federelementes (21) verfahrbar ist, bevor die Kameraeinheit (30) das Deckelelement (40) aus der Schließstellung (1) in die Offenstellung (2) aufdrücken kann.

7. Kameravorrichtung (100) nach einem der vorgenannten Ansprüche,
**dadurch gekennzeichnet,**
**dass** das Federelement (21) zumindest zum Teil in einer Federführung (20a) am Schlitten (20) gelagert ist,
wobei insbesondere der Schlitten (20), bevorzugt die Federführung (20a), mindestens einen Anschlag (20b, 20c) aufweist, an welchem die Kameraeinheit (30), insbesondere in der Rückzugslage (b), zur Auflage bringbar ist.

8. Kameravorrichtung (100) nach einem der vorgenannten Ansprüche,
**dadurch gekennzeichnet,**
**dass** der Schlitten (20) durch einen Antrieb (50) zwischen der Ruheposition (I) und der Arbeitsposition (II) antreibbar ist,
wobei insbesondere der Antrieb (50) eine Antriebsachse (51) aufweist, die gelenkig mit dem Schlitten (20) verbunden ist.

9. Kameravorrichtung (100) nach einem der vorgenannten Ansprüche,
**dadurch gekennzeichnet,**
**dass** das Gehäuse (10) eine Lagerachse (12) aufweist,
wobei insbesondere der Schlitten (20) und/oder die Kameraeinheit (30) und/oder das Deckelelement (40) an der Lagerachse (12) schwenkbar, insbesondere drehbar, gelagert sind/ist.

10. Kameravorrichtung (100) nach einem der vorhergehenden Ansprüche,
**dadurch gekennzeichnet,**
**dass** die Kameraeinheit (30) als ein Antriebselement, insbesondere als ein Übertragungsglied einer Antriebswirkung, für das Deckelelement (40) dient, um das Deckelelement (40) zwischen der Schließstellung (1) und der Offenstellung (2) zu überführen,
wobei insbesondere das Deckelelement (40) bewegbar an der Kameraeinheit (30) gelagert ist,
wobei bevorzugt das Deckelelement (40) schwenkbar und/oder linear verschiebbar an der Kameraeinheit (30) gelagert ist.

11. Kameravorrichtung (100) nach einem der vorgenannten Ansprüche,
**dadurch gekennzeichnet,**
**dass** zwischen dem Deckelelement (40) und der Kameraeinheit (30) ein Übertragungsmittel (41) vorgesehen ist,
wobei insbesondere das Übertragungsmittel (41) schwenkbar und/oder linear verschiebbar mit der Kameraeinheit (30) verbunden ist.

12. Kameravorrichtung (100) nach einem der vorgenannten Ansprüche,
**dadurch gekennzeichnet,**
**dass** die Kameraeinheit (30) ein Antriebselement (33) aufweist, weiches mit dem Deckelelement (40), insbesondere mit dem Übertragungsmittel (41) zusammenwirkt,
wobei insbesondere das Antriebselement (33) eine Führungskulisse (33a) für das Deckelelement (40), insbesondere für das Übertragungsmittel (41), aufweist,
wobei bevorzugt das Antriebselement (33) ein Druckmittel (33b) aufweist, welches von innen am Deckelelement (40) zur Auflage bringbar ist.

13. Kameravorrichtung (100) nach einem der vorgenannten Ansprüche,
**dadurch gekennzeichnet,**
**dass** am Gehäuse (10) eine Waschdüse (13) zum Reinigen einer Kameralinse (31) der Kameraeinheit (30) vorgesehen ist.

14. Verfahren zum Betrieb einer Kameravorrichtung (100), insbesondere nach einem der vorgenannten Ansprüche, die mit
mit einem Gehäuse (10), in welchem eine Kameraeinheit (30) aufgenommen ist,
und einem Deckelelement (40), ausgeführt ist,
wobei das Deckelelement (40) bewegbar zwischen zumindest zwei Stellungen (1, 2) gelagert ist, nämlich:
einer Schließstellung (1), in welcher das Deckelelement (40) eine Öffnung (11) im Gehäuse (10) verschließt, durch welche eine Bilderfassung für die Kameraeinheit (30) möglich ist,
und einer Offenstellung (2), in welcher das Deckelelement (40) die Öffnung (11) im Gehäuse (10) zumindest zum Teil freigibt,
wobei in der Schließstellung (1) des Deckelelementes (40) die Kameraeinheit (30) von außen unzugänglich sich hinter dem Deckelelement (40) befindet und in der Offenstellung (2) des Deckelelementes (40) die Bilderfassung durchführbar ist,
**dadurch gekennzeichnet,**
**dass** das Deckelelement (40) belastet durch zumindest ein Federelement (21) gelagert ist, sodass das Deckelelement (40) durch ein Drücken von außen zumindest zum Teil von der Offenstellung (2) in die Schließstellung (11) überführt wird,
und **dass** die Kameraeinheit (30) derart mit dem Deckelelement (40) verbunden ist, dass die Kameraeinheit (30) durch eine Druckkraft (D) von außen am Deckelelement (40) in der Offenstellung (2) entgegen der Wirkung einer Spannkraft des Federelementes (21) aus einer Aufnahmelage (a) in eine Rückzugslage (b) bewegt wird.

15. Verfahren nach Anspruch 14,
**dadurch gekennzeichnet,**
**dass** das Deckelelement (40) durch die Kameraeinheit (30) zwischen der Schließstellung (1) und der Offenstellung (2) angetrieben wird,
wobei insbesondere in einem Notfallbetrieb, bspw. beim vereisten Deckelelement (40) in der Schließstellung (1), die Kameraeinheit (30) aus einer Aufnahmelage (a) in eine Rückzugslage (b) entgegen der Wirkung einer Spannkraft des Federelementes (21) verfahren wird, bevor die Kameraeinheit (30) das Deckelelement (40) aus der Schließstellung (1) in die Offenstellung (2) aufdrücken kann.

## Claims

1. Camera device (100) for capturing images of the exterior of a motor vehicle, with a housing (10) in which a camera unit (30) is comprised,
and a cover element (40),
which is mounted movably between at least two positions (1, 2), namely:
a closed position (1), in which the cover element (40) closes an opening (11) in the housing (10), through which an image capture for the camera unit (30) is possible
and an open position (2) in which the cover element (40) at least partially exposes the opening (11) in the housing (10),
wherein in the closed position (1) of the cover element (40) the camera unit (30) is located behind the cover element (40) inaccessible from the outside and in the open position (2) of the cover element (40) the image capture for the camera unit (30) can be carried out through the opening (11),
**characterized in that,**
the cover element (40) is mounted under load by at least one spring element (21), so that the cover element (40) can be transferred at least partially from the open position (2) into the closed position (1) by a compressive force (D) from the outside,
and **in that** the camera unit (30) is connected to the cover element (40) in such a way that the camera unit (30) can be moved from a receiving position (a) into a retracted position (b) by a compressive force (D) from outside on the cover element (40) in the open position (2) against the action of a clamping force of the spring element (21).

2. Camera device (100) according to claim 1,
**characterized in that,**
a carriage (20) is provided for the camera unit (30),
wherein in particular the carriage (20) is mounted movably between at least two positions (I, II), in particular on the housing (10), namely:
a rest position (I) in which the camera unit (30) is received by the carriage (20) in the housing (10),
and a working position (II) in which the camera unit (30) can be moved by the carriage (20) at least partially out of the opening (11) of the housing (10).

3. Camera device (100) according to claim 1 or 2,
**characterized in that,**
the carriage (20) has a guide (22) for the camera unit (30),
wherein in particular the carriage (20), preferably the guide (22), has at least two walls (22a, 22b) which enclose the camera unit (30), in particular in a form-locking manner.

4. Camera device (100) according to any of the preceding claims,
**characterized in that,**
the camera unit (30) is held in the carriage (20) such that it can move between a receiving position (a) and a retracted position (b),
wherein in particular the camera unit (30) is pivotably, in particular rotatably, mounted on the carriage (20),
wherein preferably the camera unit (30) is loaded by the spring element (21) into the receiving position (a).

5. Camera device (100) according to any of the preceding claims,
**characterized in that,**
the spring element (21) is arranged between the carriage (20) and the cover element (40), in particular between the carriage (20) and the camera unit (30),
wherein in particular the spring element (21) is designed in the form of a compression spring, a leg spring or a leaf spring.

6. Camera device (100) according to any of the preceding claims,
**characterized in that,**
the camera unit (30) is mounted in the carriage (20) in such a way that the camera unit (30) can be moved with the carriage (20) during normal operation,
wherein, in particular in an emergency operation, for example with the iced cover element (40) in the closed position (1), the camera unit (30) can be moved from a receiving position (a) into a retracted position (b) on the carriage (20) against the action of a clamping force of the spring element (21) before the camera unit (30) can press the cover element (40) from the closed position (1) into the open position (2).

7. Camera device (100) according to any of the preceding claims,
**characterized in that,**
the spring element (21) is mounted at least partially in a spring guide (20a) on the carriage (20),
wherein in particular the carriage (20), preferably the spring guide (20a), has at least one stop (20b, 20c) against which the camera unit (30) can be brought to rest, in particular in the retracted position (b).

8. Camera device (100) according to any of the preceding claims,
**characterized in that,**
the carriage (20) can be driven by a drive (50) between the rest position (I) and the working position (II),
wherein, in particular, the drive (50) has a drive axis (51) which is connected in a hinged manner to the carriage (20).

9. Camera device (100) according to any of the preceding claims,
**characterized in that,**
the housing (10) has a bearing axis (12),
wherein in particular the carriage (20) and/or the camera unit (30) and/or the cover element (40) are/is mounted on the bearing axis (12) so as to be pivotable, in particular rotatable.

10. Camera device (100) according to any of the preceding claims,
**characterized in that,**
the camera unit (30) serves as a drive element, in particular as a transmission member of a drive action, for the cover element (40) in order to transfer the cover element (40) between the closed position (1) and the open position (2),
wherein in particular the cover element (40) is movably mounted on the camera unit (30),
wherein preferably the cover element (40) is mounted on the camera unit (30) so as to be pivotable and/or linearly displaceable.

11. Camera device (100) according to any of the preceding claims,
**characterized in that,**
a transmission means (41) is provided between the cover element (40) and the camera unit (30),
wherein in particular the transmission means (41) is connected to the camera unit (30) so as to be pivotable and/or linearly displaceable.

12. Camera device (100) according to any of the preceding claims,
**characterized in that,**
the camera unit (30) has a drive element (33) which interacts with the cover element (40), in particular with the transmission means (41),
wherein in particular the drive element (33) has a guide link (33a) for the cover element (40), in particular for the transmission means (41),
wherein preferably the drive element (33) has a pressure means (33b) which can be brought to bear from the inside on the cover element (40).

13. Camera device (100) according to any of the preceding claims,
**characterized in that,**
a washing nozzle (13) for cleaning a camera lens (31) of the camera unit (30) is provided on the housing (10).

14. Method for operating a camera device (100), in particular according to one of the preceding claims, which is designed with a housing (10) in which a camera unit (30) is comprised and a cover element (40), wherein
the cover element (40) is mounted so as to be movable between at least two positions (1, 2), namely
a closed position (1), in which the cover element (40) closes an opening (11) in the housing (10), through which an image capture for the camera unit (30) is possible
and an open position (2) in which the cover element (40) at least partially exposes the opening (11) in the housing (10),
wherein in the closed position (1) of the cover element (40) the camera unit (30) is located behind the cover element (40) so as to be inaccessible from the outside and in the open position (2) of the cover element (40) the image capture can be carried out,
**characterized in that,**
the cover element (40) is mounted under load by at least one spring element (21), so that the cover element (40) is transferred at least partially from the open position (2) into the closed position (1) by pressing from outside,
and **in that** the camera unit (30) is connected to the cover element (40) in such a way that the camera unit (30) is moved from a receiving position (a) into a retracted position (b) by a compressive force (D) from outside on the cover element (40) in the open position (2) against the action of a clamping force of the spring element (21).

15. Method according to claim 14,
**characterized in that,**
the cover element (40) is driven by the camera unit (30) between the closed position (1) and the open position (2),
wherein, in particular in an emergency operation, for example with the iced cover element (40) in the closed position (1), the camera unit (30) is moved from a receiving position (a) into a retracted position (b) against the action of a clamping force of the spring element (21) before the camera unit (30) can press the cover element (40) from the closed position (1) into the open position (2).

## Revendications

1. Dispositif de caméra (100) pour la capture d'images de l'extérieur d'un véhicule automobile, avec un boîtier (10) dans lequel est logée une unité de caméra (30),
et un élément de couverture (40),
qui est monté de façon mobile entre au moins deux positions (1, 2), à savoir
une position fermée (1), dans laquelle l'élément de couverture (40) ferme une ouverture (11) dans le boîtier (10), par laquelle une capture d'image pour l'unité de caméra (30) est possible
et une position ouverte (2) dans laquelle l'élément de couverture (40) expose au moins partiellement l'ouverture (11) du boîtier (10),
dans lequel, dans la position fermée (1) de l'élément de couverture (40), l'unité de caméra (30) est située derrière l'élément de couverture (40) inaccessible de l'extérieur et dans la position ouverte (2) de l'élément de couverture (40), la capture d'image pour l'unité de caméra (30) peut être effectuée par l'ouverture (11),
**caractérisé en ce que,**
l'élément de couverture (40) est monté sous charge par au moins un élément de ressort (21), de sorte que l'élément de couverture (40) peut être transféré au moins partiellement de la position ouverte (2) à la position fermée (1) par une force de compression (D) de l'extérieur,
et **en ce que** l'unité de caméra (30) est reliée à l'élément de couverture (40) de telle manière que l'unité de caméra (30) peut être déplacée d'une position de réception (a) dans une position rétractée (b) par une force de compression (D) de l'extérieur sur l'élément de couverture (40) dans la position ouverte (2) contre l'action d'une force de serrage de l'élément de ressort (21).

2. Dispositif de caméra (100) selon la revendication 1,
**caractérisé en ce qu'**
un chariot (20) est prévu pour l'unité caméra (30),
dans lequel le chariot (20) est notamment monté de manière mobile entre au moins deux positions (I, II), en particulier sur le boîtier (10), à savoir
une position de repos (I) dans laquelle l'unité de caméra (30) est reçue par le chariot (20) dans le boîtier (10),
et une position de travail (II) dans laquelle l'unité de caméra (30) peut être déplacée par le chariot (20) au moins partiellement hors de l'ouverture (11) du boîtier (10).

3. Dispositif de caméra (100) selon la revendication 1 ou 2,
**caractérisé en ce que,**
le chariot (20) comporte un guide (22) pour l'unité caméra (30),
dans lequel le chariot (20), de préférence le guide (22), présente au moins deux parois (22a, 22b) qui entourent l'unité de caméra (30), en particulier par complémentarité de forme.

4. Dispositif de caméra (100) selon l'une des revendications précédentes,
**caractérisé en ce que,**
l'unité de caméra (30) est maintenue dans le chariot (20) de telle sorte qu'elle puisse se déplacer entre une position de réception (a) et une position rétractée (b),
dans lequel l'unité de caméra (30) est notamment montée sur le chariot (20) de manière à pouvoir pivoter, en particulier à pouvoir tourner
dans lequel de préférence l'unité de caméra (30) est chargée par l'élément de ressort (21) dans la position de réception (a).

5. Dispositif de caméra (100) selon l'une des revendications précédentes,
**caractérisé en ce que,**
l'élément de ressort (21) est disposé entre le chariot (20) et l'élément de couverture (40), en particulier entre le chariot (20) et l'unité de caméra (30),
dans lequel l'élément de ressort (21) est notamment conçu sous la forme d'un ressort de compression, d'un ressort à branches ou d'un ressort à lames.

6. Dispositif de caméra (100) selon l'une des revendications précédentes,
**caractérisé en ce que,**
l'unité de caméra (30) est montée dans le chariot (20) de telle sorte que l'unité de caméra (30) puisse être déplacée avec le chariot (20) pendant une opération normal,
dans lequel, en particulier dans une opération d'urgence, par exemple avec l'élément de couverture glacé (40) en position fermée (1), l'unité de caméra (30) peut être déplacée d'une position de réception (a) dans une position rétractée (b) sur le chariot (20) contre l'action d'une force de serrage de l'élément de ressort (21) avant que l'unité de caméra (30) puisse presser l'élément de couverture (40) de la position fermée (1) dans la position ouverte (2).

7. Dispositif de caméra (100) selon l'une des revendications précédentes,
**caractérisé en ce que,**
l'élément de ressort (21) est monté au moins partiellement dans un guide de ressort (20a) sur le chariot (20),
dans lequel le chariot (20), de préférence le guide de ressort (20a), présente au moins une butée (20b, 20c) contre laquelle l'unité de caméra (30) peut être amenée à s'appuyer, en particulier en position rétractée (b).

8. Dispositif de caméra (100) selon l'une des revendications précédentes,
**caractérisé en ce que,**
le chariot (20) peut être entraîné par un entraînement (50) entre la position de repos (I) et la position de travail (II),
dans lequel, en particulier, l'entraînement (50) comporte un essieu moteur (51) qui est relié de manière articulée au chariot (20).

9. Dispositif de caméra (100) selon l'une des revendications précédentes,
**caractérisé en ce que,**
le boîtier (10) comprend un axe de roulement (12),
dans lequel en particulier le chariot (20) et/ou l'unité de caméra (30) et/ou l'élément de couverture (40) est/sont monté(s) sur l'axe de roulement (12) de manière à pouvoir pivoter, en particulier à pouvoir tourner.

10. Dispositif de caméra (100) selon l'une des revendications précédentes,
**caractérisé en ce que,**
l'unité de caméra (30) sert d'élément d'entraînement, en particulier d'élément de transmission d'une action d'entraînement, pour l'élément de couverture (40) afin de transférer l'élément de couverture (40) entre la position fermée (1) et la position ouverte (2),
dans lequel, en particulier, l'élément de couverture (40) est monté de manière mobile sur l'unité de caméra (30),
dans lequel de préférence l'élément de couverture (40) est monté sur l'unité de caméra (30) de manière à pouvoir pivoter et/ou se déplacer linéairement.

11. Dispositif de caméra (100) selon l'une des revendications précédentes,
**caractérisé en ce qu'**
un moyen de transmission (41) est prévu entre l'élément de couverture (40) et l'unité de caméra (30),
dans laquelle en particulier le moyen de transmission (41) est relié à l'unité de caméra (30) de manière à pouvoir pivoter et/ou se déplacer linéairement.

12. Dispositif de caméra (100) selon l'une des revendications précédentes,
**caractérisé en ce que,**
l'unité de caméra (30) comporte un élément d'entraînement (33) qui interagit avec l'élément de couverture (40), en particulier avec le moyen de transmission (41),
dans lequel l'élément d'entraînement (33), en particulier, comporte une liaison de guidage (33a) pour l'élément de couverture (40), notamment pour le moyen de transmission (41),
dans lequel l'élément d'entraînement (33) comporte de préférence un moyen de pression (33b) qui peut être mis en contact de l'intérieur avec l'élément de couverture (40).

13. Dispositif de caméra (100) selon l'une des revendications précédentes,
**caractérisé en ce qu'**
une buse de lavage (13) pour le nettoyage d'un objectif de caméra (31) de l'unité de caméra (30) est prévue sur le boîtier (10).

14. Procédé pour faire fonctionner un dispositif de caméra (100), en particulier selon l'une des revendications précédentes, qui est conçu avec un boîtier (10) dans lequel une unité de caméra (30) est logée et un élément de couverture (40), dans lequel
l'élément de couverture (40) est monté de façon mobile entre au moins deux positions (1, 2), à savoir
une position fermée (1), dans laquelle l'élément de couverture (40) ferme une ouverture (11) dans le boîtier (10), par laquelle une capture d'image pour l'unité de caméra (30) est possible
et une position ouverte (2) dans laquelle l'élément de couverture (40) expose au moins partiellement l'ouverture (11) du boîtier (10),
dans lequel, dans la position fermée (1) de l'élément de couverture (40), l'unité de caméra (30) est située derrière l'élément de couverture (40) inaccessible de l'extérieur et dans la position ouverte (2) de l'élément de couverture (40), la capture d'image peut être effectuée,
**caractérisé en ce que,**
l'élément de couverture (40) est monté sous charge par au moins un élément de ressort (21), de sorte que l'élément de couverture (40) est transféré au moins partiellement de la position ouverte (2) à la position fermée (1) par une force de compression de l'extérieur,
et **en ce que** l'unité de caméra (30) est reliée à l'élément de couverture (40) de telle manière que l'unité de caméra (30) est déplacée d'une position de réception (a) dans une position rétractée (b) par une force de compression (D) de l'extérieur sur l'élément de couverture (40) dans la position ouverte (2) contre l'action d'une force de serrage de l'élément de ressort (21).

15. Procédé selon la revendication 14,
**caractérisé en ce que,**
l'élément de couverture (40) est entraîné par l'unité de caméra (30) entre la position fermée (1) et la position ouverte (2),
dans lequel, en particulier dans une opération d'urgence, par exemple avec l'élément de couverture glacé (40) dans la position fermée (1), l'unité de caméra (30) est déplacée d'une position de réception (a) dans une position rétractée (b) contre l'action d'une force de serrage de l'élément de ressort (21) avant que l'unité de caméra (30) puisse presser l'élément de couverture (40) de la position fermée (1) dans la position ouverte (2).
